# EUROPEAN PATENT SPECIFICATION

(11) **EP 0 815 734 B1**
(45) Date of publication and mention of the grant of the patent: **05.01.2000**
(21) Application number: 96906779.2
(22) Date of filing: 27.03.1996
(51) Int. Cl.: A23B 7/03, A23L 1/216

(54) **PROCESS FOR DEHYDRATING TUBERS IN ORDER TO OBTAIN A STORABLE IMPERISHABLE FOOD PRODUCT, AND FOOD PRODUCT THUS OBTAINED**
VERFAHREN ZUR DEHYDRATISIERUNG VON KNOLLENFRÜCHTEN ZUR HERSTELLUNG EINES LAGERFÄHIGEN, DAUERHAFTENNAHRUNGSMITTEL UND DAS SO ERHALTENE NAHRUNGSMITTEL
PROCEDE DE DESHYDRATATION DE TUBERCULES POUR L'OBTENTION D'UN PRODUIT STOCKABLE IMPERISSABLE, ET PRODUIT ALIMENTAIRE AINSI OBTENU

(30) Priority: 11.07.1995 ES 9501388; 17.11.1995 WO PCT/ES95/00129
(43) Date of publication of application: 07.01.1998
(73) Proprietor: Macalfa, S.L., 28016 Madrid (ES)
(72) Inventor: CAMACHO JUAREZ, Francisco, E-Aravaca (ES)
(74) Representative: Ungria Lopez, Javier
(86) International application number: ES9600067
(87) International publication number: WO9702752

(56) References cited:
- EP-A- 0 099 287
- ES-A- 2 063 706

## Description

### TECHNICAL FIELD OF THE INVENTION

The invention refers to a process for dehydrating tubers in order to obtain a storable and essentially imperishable food product for long periods of time, as well as a product based on dehydrated tubers.

### PRIOR ART OF THE INVENTION

Tubers, rhizomes outgrown from plants with a high content of starch such as potatoes, sweet potatoes, maniocs., Ipomea batatas, etc. are traditionally and presently a very important part of the human and animal diet, as energy suppliers. Given the seasonalness of the crops of a large part of tubers, their preservation is of great interest.

Hence, conventionally harvested tubers have been kept in dry environments protected against exposure to sunlight, for the purpose of preventing their rotting and germination. However, this type of preservation implies, on the one hand, the need to have large surface areas for storage and, on the other hand, the fact that the goods cannot be stored for more than one or two years during which the same gradually spoil until they become waste products.

There are also fried products, such as potato chips, fried in oil or grease that, vacuum-packed, may be stored for relatively long periods of time, although, essentially based on degradation by oxidation of the oil or of the fat that impregnate this type of product, a loss of the organoleptic quality of these products and the development of unpleasant tasting or even toxic substances tends to be produced.

On the other hand, with the advancement of vacuum-packaging techniques, tubers such as potatoes or sweet potatoes are presently precooked and vacuum-packed which also permits a relatively long storage although the goods thus preserved spoil slowly.

EP-A-0 099 287 discloses a process for the conservation of precooked potatoes for producing fried fries according to which the final product has a water content of 8%wt and a reduced starch content. The need of precooking limits the types of dishes which are eligible for preparation with this final product.

Other preservation techniques are based on ultrafreezing of the whole or cut up tubers, which has the inconvenience that their storage results to be very costly for the construction, maintenance and operation of the freezing chambers that are needed.

Finally, there are products such as, for example, potato flakes, coming from finely cut up, mashed and dehydrated potatoes, rehydratable in order to obtain mashed potatoes, that may be stored for long periods of time without substantially losing their organoleptic qualities. The disadvantage of this type of product mainly consists of the fact that they can only be consumed as mashed potatoes and they are not usable for other types of human foods.

In order to solve this last problem, in other words, in order to obtain a product comprised of dehydrated tubers whose structure and other organoleptic qualities were, after rehydration thereof, the most similar as possible to fresh potatoes, research has been done. However, neither products nor processes that are feasible on an industrial level have been found.

Basically, the problem in the dehydration of tubers consists of the starch that they contain. As it is known, tubers such as potatoes, sweet potatoes, maniocs, Ipomea batatas, etc. contain around 75 to 85% by weight of water and 15 to 20% by weight of starch. With regard to the starch in tubers, it is essentially comprised of two macromolecules, namely, from 16 to 35% of amylose with a molecular weight comprised between 17,000 and 225,000 and soluble in water, and from 64 to 85% of amylopectin with a molecular weight of 200,000 to 1,000,000 and insoluble in water. The starch has great hydrolization ability, therefore the tubers offer a large resistance to dehydration, especially when heat dehydration processes are involved, which, according to conventional methods, implied the formation of a saccharide layer or film on the outside of the tubers, impermeable to evapotranspiration of the water contained inside the tubers, which lead to internal "cooking" of the tubers.

An attempt has been made to solve this inconvenience by reacting and removing from the tuber, one of the starch macromolecules, the water soluble amylose. However, this implies that the other part of the starch, comprised essentially of amylopectin, remains inside the tuber grouped in stable concentrations, and that gives it some very unpleasant organoleptic characteristics which made the marketing thereof as a human food product unfeasible.

Aside from the above mentioned inconveniences of the "preserved" products comprised of tubers, the high content of starch of the tubers results in a very high energy supply to the human diet, considered to be excessive for the diets of a large number of consumers.

Fresh tubers or tubers conserved by means of vacuum-pack techniques with or without precooking, also have the inconvenience that, in view of the high water content of the tubers and the weight and resulting volume, their transport and storage turn out to be expensive.

### OBJECT OF THE INVENTION

The object of the present invention is to solve the above described inconveniences by means of an industrially feasible process that permits vehiculization of the amylopectin to the outside from the the inside of the tuber, in order to obtain a dehydrated food product with excellent organoleptic qualities and with a form that allows it to added to a large number of dishes in which tubers are conventionally present.

### DETAILED DESCRIPTION OF THE INVENTION

The invention refers to a process for dehydrating raw tubers, such as potatoes, sweet potatoes, maniocs, Ipomea batatas, etc., in order to obtain a food product with a water content of 10 to 30% by weight, whose process essentially comprises the steps defined in claim 1.

By the invention a dehydrated food product with a water content of 10 to 30% by weight which, once rehydrated, has some pleasant organoleptic qualities practically identical to those of the raw tuber, is obtained. Besides, upon having partially removed the starch (around 60%), a product lower In calories than the raw tuber, which makes it especially beneficial for consumers, is obtained. Given that the product resulting from the process does not have a notably hygroscopic character and is not susceptible to oxidation at room temperature, it is storable for long periods of time without loss of its organoleptic qualities. The proportions of the two macromolecules that comprise the starch present in the final product basically correspond to the proportions in the fresh tuber.

On the other hand, the extracted starch can be used as a starting product for other food products, feed, or even other industrial type products that contain starch.

Another one of the advantages of the process according to the invention, is that it may be done entirely in conventional installations and by means of conventional means.

The extracting agent solution is used as a reagent in the extraction to start breakage of the macromolecular chain of the amylopectin in such a way that, upon subjecting the tuber treated in this way to dehydration in a hot air flow, the layer of "caramelized" sugars is not formed on the surface of the tuber or of the cut up tuber, nor is there grouping in stable concentrations, that is to say, evapotranspiration of the tuber remains possible.

Amylopectin is an avid oxygen grabbing compound, therefore, the extracting agent must be capable of oxidizing the amylopectin in order to be able to start the breakage of its macromolecular chain. For example, suitable agents are low concentration solutions of sodium hypochlorite, acetic acid, ethyl alcohol, citric acid, muriatic acid, glacial acetic acid or nitrous acid, being apt for human consumption.

The first step (=g1) of the program of applying the hot air flow, in other words, applying a hot air flow at a temperature between 114 and 143°C (raised by 4.5 to 5.5°C per 0.5 mm of thickness in excess of 1.5 mm of the piece) for 12 to 17 minutes (increased by 5 minutes per 0.5 mm of thickness of the piece in excess of 1.5 mm) as it is necessary to produce the breakage reaction of the macromolecule of amylopectin during dehydration, while the subsequent steps serve to maintain the breakage reaction of the amylopectin chain, thus avoiding the formation of the above mentioned layers that would prevent evapotranspiration, and therefore, dehydration.

Conveniently, the velocity of the air flow in the conventional drying tunnel or stove is adjusted in such a way that, per each 100 kg. of tuber a volume of 0.5 m³ is provided for and a velocity of air flow of 25 m³ per minute is applied when the maximum water content of the raw tubers is lower than or equal to 80% by weight. Preferably, per each additional 1% of water in the raw tubers, the velocity of air flow is increased 1 m³ per minute.

Ideal tubers for human consumption are, for example, potatoes, sweet potatoes, maniocs and Ipomea batatas. Among them, the potato is the tuber used the most for human consumption in Europe and in North America.

Conveniently, larger tubers are cut in pieces or slices to make their dehydration easier. However, when it is a question of small tubers, such as the so-called French fries of a very small volume, they may be dehydrated without the need of previously cutting them.

Rehydration merely consists of immersing the final product in water until enough water (approximately eight times its own weight) has been absorbed so as to acquire a consistency practically equal to that of a raw tuber.

### EMBODIMENTS OF THE INVENTION

Some practically embodiments of the invention based on the following general conditions will be described hereinafter:

100 kg. of potatoes are peeled in a conventional peeling machine and washed with water and cut in slices with a specific thickness. The content of water and of starch desired in the product resulting from the dehydration process is established. By means of a conventional ABBA saccharimeter the content of starch is established in terms of representative samples as well as the thickness of the pieces.

The pieces are introduced in a 200 liter volume basket and the basket is introduced in a vessel that contains 250 liters of an extracting agent solution, according to one of the following three alternatives
- sodium hypochlorite 5%;
- acetic acid 4%;
- ethyl alcohol 7%

Example 1: In the above described general conditions, the potatoes are cut in 1.5 mm thick slices. The average content of water and of starch of the pieces is 79% by weight of water and 18% by weight of starch, respectively.
   It is determined that the percentage by weight of water and of starch that is to be obtained in the final product is 12% of water and 10% of starch, respectively.
   The slices are immersed in the sodium hypochlorite solution for 8 minutes, after which they are left to drip-dry and they are introduced in a conventional stove with a volume of 0.5m³, provided with a hot air flow system and that permits the adjustment of the relative humidity of the air flow between 30% and 13% and the velocity of the air flow is adjusted to 25 m³ per minute.
   The pieces are kept in the stove according to the following program:
   15 minutes at 135°C;
   30 minutes during which the temperature is lowered from 135°C to 75°C at a velocity of -2°C per minute;
   10 minutes during which the temperature is raised to 85°C at a velocity of 1°C per minute;
   20 minutes during which the temperature is lowered to 65°C at a velocity of -1°C per minute.
   Then the dehydrated pieces are removed from the stove and left to cool at room temperature to obtain a packageable product.
Example 2: Under the above described general conditions, the potatoes are cut in 2.5 mm thick slices. The average content of water and of starch is 82% by weight of water and 15% by weight of starch, respectively.
   It is determined that the percentage by weight of water and of starch that is to be obtained in the final product is 11% of water and 10% of starch, respectively.
   The slices are immersed in the sodium hypochlorite solution for 5 minutes, after which they are left to drip-dry and they are introduced in a conventional stove with a volume of 0.5m³, provided with a hot air flow system and that permits the adjustment of the relative humidity of the air flow between 30% and 13% and the velocity of the air flow is adjusted to 27 m³ per minute.
   The pieces are kept in the stove according to the following program:
   25 minutes at 145°C;
   1 minute during which the temperature is lowered from 145°C to 135°C;
   30 minutes during which the temperature is lowered from 135°C to 75°C at a velocity of -2°C per minute;
   10 minutes during which the temperature is raised to 85°C at a velocity of 1°C per minute.
   20 minutes during which the temperature is lowered to 65°C at a velocity of -1°C per minute.
   Then the dehydrated pieces are removed from the stove and left to cool at room temperature to obtain a packageable product.
Example 3: Under the above described general conditions, the potatoes are cut in 1.5 mm thick slices. The average content of water and of starch is 79% by weight of water and 18% by weight of starch, respectively.
   It is determined that the percentage by weight of water and of starch that is to be obtained in the final product is 11% of water and 10% of starch, respectively.
   The slices are immersed in the sodium hypochlorite solution for 8 minutes, after which they are left to drip-dry and they are introduced in a conventional stove with a volume of 0.5m³, provided with a hot air flow system and that permits the adjustment of the relative humidity of the air flow between 30% and 12% and the velocity of the air flow is adjusted to 25 m³ per minute.
   The pieces are kept in the stove according to the following program:
   15 minutes at 120°C;
   approximately 41 minutes during which the temperature is lowered from 120°C to 50°C at a velocity of 2°C per minute;
   20 minutes during which the temperature is raised to 80°C at a velocity of 1.5°C per minute;
   20 minutes during which the temperature is lowered to 60°C at a velocity of -°1C per minute.
   Then the dehydrated pieces are removed from the stove and left to cool at room temperature to obtain a packageable product.
Example 4: Under the above described general conditions, the potatoes are cut in 2.5 mm thick slices. The average content of water and of starch is 82% by weight of water and 15% by weight of starch, respectively.
   It is determined that the percentage by weight of water and of starch that is to be obtained in the final product is 11% of water and 10% of starch, respectively.
   The slices are immersed in the sodium hypochlorite solution for 5 minutes, after which they are left to drip-dry and they are introduced in a conventional stove with a volume of 0.5m³, provided with a hot air flow system and that permits the adjustment of the relative humidity of the air flow between 30% and 13% and the velocity of the air flow is adjusted to 27 m³ per minute.
   The pieces are kept in the stove according to the following program:
   25 minutes at 150°C;
   1 minute during which the temperature is lowered from 150°C to 140°C;
   30 minutes during which the temperature is lowered from 140°C to 71°C at a velocity of -2.1°C per minute;
   10 minutes during which the temperature is raised to 81°C at a velocity of 1°C per minute;
   20 minutes during which the temperature is lowered to 60°C at a velocity of -1°C per minute.
   Then the dehydrated pieces are removed from the stove and left to cool at room temperature to obtain a packageable product.
Example 5: Under the above described general conditions, the potatoes are cut in 1.5 mm thick slices. The average content of water and of starch is 79% by weight of water and 18% by weight of starch, respectively.
   It is determined that the percentage by weight of water and of starch that is to be obtained in the final product is 12% of water and 10% of starch, respectively.
   The slices are immersed in the acetic acid solution for 8 minutes, after which they are left to drip-dry and they are introduced in a conventional stove with a volume of 0.5m³, provided with a hot air flow system and that permits the adjustment of the relative humidity of the air flow between 30% and 13% and the velocity of the air flow is adjusted to 25 m³ per minute.
   The pieces are kept in the stove according to the following program:
   15 minutes at 135°C;
   30 minutes during which the temperature is lowered from 135°C to 75°C at a velocity of -2°C per minute;
   10 minutes during which the temperature is raised to 85°C at a velocity of 1°C per minute;
   20 minutes during which the temperature is lowered to 65°C at a velocity of -1°C per minute.
   Then the dehydrated pieces are removed from the stove and left to cool at room temperature to obtain a packageable product.
Example 6: Under the above described general conditions, the potatoes are cut in 2.5 mm thick slices. The average content of water and of starch is 82% by weight of water and 15% by weight of starch, respectively.
   It is determined that the percentage by weight of water and of starch that is to be obtained in the final product is 11% of water and 10% of starch, respectively.
   The slices are immersed in the ethyl alcohol solution for 5 minutes, after which they are left to drip-dry and they are introduced in a conventional stove with a volume of 0.5m³, provided with a hot air flow system and that permits the adjustment of the relative humidity of the air flow between 30% and 13% and the velocity of the air flow is adjusted to 27 m³ per minute.
   The pieces are kept in the stove according to the following program:
   25 minutes at 145°C;
   1 minute during which the temperature is lowered from 145°C to 135°C;
   30 minutes during which the temperature is lowered from 135°C to 75°C at a velocity of -2°C per minute;
   10 minutes during which the temperature is raised to 85°C at a velocity of 1°C per minute;
   20 minutes during which the temperate is lowered to 65°C at a velocity of -1°C per minute.

   Then the dehydrated pieces are removed from the stove and left to cool at room temperature to obtain a packageable product.

Obviously, the above indicated examples may be equally applied to other tubers such as sweet potatoes, maniocs and Ipomea batatas.

## Claims

1. A process for dehydrating raw tubers in order to obtain a food product with a water content between 10 and 30% by weight, which comprises the steps of:
(a) removing the skin from the essentially dirt free raw tubers;
(b) selecting the final content of starch and water that is to be contained in the final food product;
(c) determining the initial percentages of starch and water in the raw tubers; optionally cutting the tubers in slices of a specific thickness;
(d) determining the thickness of the peeled tubers, optionally cut in slices;
(e) immersing the tubers in a solution of 2.5 to 8.0% (v/v) of an extracting agent apt for human consumption and capable of oxidizing amylopectin, for a period of time corresponding to the time in minutes corresponding to the number resulting from subtracting from said initial percentage of starch said final percentage of starch;
(f) eliminating at least a portion of the extracting agent solution by drip-drying;
(g) exposing the drip-dried tubers to a dehydration process by applying a hot air flow in a suitable drying device, in accordance with a program, calculated in terms of a thickness of 1.5 mm, which comprises the following steps:
(g1) applying a hot air flow that has an initial temperature of 114 to 143ºC for 12 to 17 minutes;
(g2) reducing the temperature at a velocity of between 1.7 and 2.3ºC per minute until a temperature between 45 to 92ºC is reached; raising the temperature to 73 to 97º C;
(g3) reducing the temperature at a velocity of 0.9 to 1.1ºC per minute until a temperature of 55 to 75ºC is reached;
(g4) raising, per each 0.5 mm of thickness in excess of 1.5mm of the tubers or of the slices of tubers, the period of remaining at said initial temperature (g1) by 5 minutes, and
(g5) raising, per each 0.5mm of thickness in excessof 1.5mm of the tubers or the slices of tubers, the initial temperature (g1) by 4.5 to 5.5ºC whereafter the resulting temperature is reduced in one go to 114 to 143ºC before starting step (g2) in which the temperature is reduced at a velocity of 1.7 to 2.3ºC per minute; and
(g6) keeping the relative humidity of the air flow below 35% but above the percentage of water desired in the final food product.

2. Process according to claim 1, characterized in that the extracting agent solution is selected among solutions of sodium hypochlorite, acetic acid, ethyl alcohol, citric acid, muriatic acid, glacial acetic acid or nitrous acid.

3. Process according to claim 1, wherein the initial temperature of the program of applying hot air is from 130 to 140ºC that is applied for 15 minutes.

4. Process according to claim 3, wherein the initial temperature is 135º C.

5. Process according to claim 1, wherein the initial temperature is reduced at a velocity of 2ºC per minute until a temperature of 70-80ºC is reached.

6. Process according to claim 5, wherein the initial temperature is reduced at a velocity of 2ºC per minute until a temperature of 75ºC is reached.

7. Process according to claim 6, wherein, after reducing the initial temperature, the temperature is raised from 85ºC at a velocity of 1ºC.

8. Process according to claim 1, wherein after the increase that follows the reduction of the initial temperature, the temperature is reduced at a velocity of 1.0ºC per minute until a temperature of 60-70ºC is reached.

9. Process according to claim 8, wherein the temperature is reduced until a temperature of 65ºC is reached.

10. Process according to claim 1, wherein, per 0.5 mm of thickness additional to a thickness of 1.5 mm of the tuber optionally cut, the period of remaining at said initial temperature is increased by 5 minutes, and the initial temperature is raised 5.0ºC the resulting temperature being reduced in one go to 65ºC before starting the step in which the temperature is reduced at a velocity of 1.7 to 2.3ºC per minute.

11. Process according to claim 1, wherein the tuber is selected among potatoes, sweet potatoes, maniocs and Ipomea batatas.

12. Process according to claim 2, wherein the concentration of the solution of acetic acid in water is 3 to 4%.

13. Process according to claim 2, wherein the concentration of the solution of ethyl alcohol in water is 7 to 8%.

14. Process according to claim 2, wherein the concentration of the solution of sodium hypochlorite in water is 5 to 6%.

15. Dehydrated food product according to the process defined in any of the preceding claims which comprises between 10 and 15% by weight of water, and between 40 and 60% less starch than the raw tuber.

## Patentansprüche

1. Verfahren zum Dehydratisieren von rohen Knollen, um ein Lebensmittelerzeugnis mit einem Wassergehalt zwischen 10 und 30 Gew.-% herzustellen, das die folgenden Schritte umfaßt:
(a) Entfernen der Haut von den im wesentlichen schmutzfreien rohen Knollen;
(b) Auswählen des abschließenden Gehaltes an Stärke und Wasser, der in dem Lebensmittelenderzeugnis enthalten sein soll;
(c) Feststellen des anfänglichen prozentualen Anteils an Stärke und Wasser in den rohen Knollen; wahlweises Schneiden der Knollen in Scheiben einer bestimmten Dicke;
(d) Feststellen der Dicke der geschälten Knollen, die wahlweise in Scheiben geschnitten sind;
(e) Eintauchen der Knollen in eine Lösung von 2,5 bis 8% (Volumenverhältnis) eines Extraktionsmittels, das für die menschliche Ernährung geeignet und in der Lage ist, Amylopektin zu oxidieren, über einen Zeitraum, der der Zeit in Minuten entspricht, die der Zahl entspricht, die sich ergibt, wenn von dem anfänglichen prozentualen Anteil an Stärke der abschließende prozentuale Anteil an Stärke subtrahiert wird;
(f) Eliminieren wenigstens eines Teils der Extraktionsmittellösung durch Abtropfen;
(g) Durchführen eines Dehydratisierungsverfahrens mit den abgetropften Knollen durch Einwirken eines Heißluftstroms in einer geeigneten Trockenvorrichtung entsprechend einem Programm, das für eine Dicke von 1,5 mm berechnet ist und die folgenden Schritte umfaßt:
(g1) Einwirken eines Heißluftstroms, der eine Ausgangstemperatur von 114 bis 143°C aufweist, über 12 bis 17 Minuten;
(g2) Verringern der Temperatur mit einer Geschwindigkeit zwischen 1,7 und 2,3°C pro Minute, bis eine Temperatur zwischen 45 und 92°C erreicht ist; Erhöhen der Temperatur auf 73 bis 97°C;
(g3) Verringern der Temperatur mit einer Geschwindigkeit von 0,9 bis 1,1°C pro Minute, bis eine Temperatur von 55 bis 75°C erreicht ist;
(g4) Verlängern des Zeitraums des Verbleibens bei der Ausgangstemperatur (g1) um 5 Minuten für jeweils 0,5 mm Dicke der Knollen bzw. Scheiben von Knollen über 1,5 mm, und
(g5) Erhöhen der Ausgangstemperatur (g1) um 4,5 bis 5,5°C für jeweils 0,5 mm Dicke der Knollen bzw. Scheiben von Knollen über 1,5 mm, wobei die entstandene Temperatur anschließend in einem Durchgang auf 114 bis 143°C verringert wird, bevor Schritt (g2) gestartet wird, bei dem die Temperatur mit einer Geschwindigkeit von 1,7 bis 2,3°C pro Minute verringert wird; und
(g6) Halten der relativen Feuchte des Luftstroms unter 35%, jedoch über dem prozentualen Anteil an Wasser, der in dem Lebensmittelenderzeugnis gewünscht wird.

2. Verfahren nach Anspruch 1, **dadurch gekennzeichnet,** daß die Extraktionsmittellösung aus Lösungen von Natriumhypochlorid, Essigsäure, Ethylalkohol, Zitronensäure, Salzsäure, Eisessig oder salpetriger Säure ausgewählt wird.

3. Verfahren nach Anspruch 1, wobei die Ausgangstemperatur des Programms des Einwirkens von Heißluft zwischen 130 und 140°C liegt und 15 Minuten einwirkt.

4. Verfahren nach Anspruch 3, wobei die Ausgangstemperatur 135°C beträgt.

5. Verfahren nach Anspruch 1, wobei die Ausgangstemperatur mit einer Geschwindigkeit von 2°C pro Minute verringert wird, bis eine Temperatur von 70-80°C erreicht ist.

6. Verfahren nach Anspruch 5, wobei die Ausgangstemperatur mit einer Geschwindigkeit von 2°C pro Minute verringert wird, bis eine Temperatur von 75°C erreicht ist.

7. Verfahren nach Anspruch 6, wobei, nachdem die Ausgangstemperatur verringert wurde, die Temperatur mit einer Geschwindigkeit von 1°C von 85°C ausgehend erhöht wird.

8. Verfahren nach Anspruch 1, wobei nach dem Anstieg, der auf die Verringerung der Ausgangstemperatur erfolgt, die Temperatur mit einer Geschwindigkeit von 1,0°C pro Minute verringert wird, bis eine Temperatur von 60-70°C erreicht ist.

9. Verfahren nach Anspruch 8, wobei die Temperatur verringert wird, bis eine Temperatur von 75°C erreicht ist.

10. Verfahren nach Anspruch 1, wobei pro 0,5 mm Dicke der wahlweise geschnittenen Knollen zusätzlich zu einer Dicke von 1,5 mm der Zeitraum des Verbleibens bei der Ausgangstemperatur um 5 Minuten verlängert wird, und die Ausgangstemperatur um 5°C erhöht wird und die entstandene Temperatur in einem Durchgang auf 65°C verringert wird, bevor der Schritt ausgelöst wird, bei dem die Temperatur mit einer Geschwindigkeit von 1,7 bis 2,3°C pro Minute verringert wird.

11. Verfahren nach Anspruch 1, wobei die Knolle aus Kartoffeln, Süßkartoffeln, Maniok und Bataten (Ipomoea batatas) ausgewählt wird.

12. Verfahren nach Anspruch 2, wobei die Konzentration der Lösung von Essigsäure in Wasser 3 bis 4% beträgt.

13. Verfahren nach Anspruch 2, wobei die Konzentration der Lösung von Ethylalkohol in Wasser 7 bis 8% beträgt.

14. Verfahren nach Anspruch 2, wobei die Konzentration der Lösung von Natriumhypochlorid in Wasser 5 bis 6% beträgt.

15. Dehydratisiertes Lebensmittelerzeugnis nach dem Verfahren, das in einem der vorangehenden Ansprüche definiert ist, weiches zwischen 10 und 15 Gew.-% Wasser sowie zwischen 40 und 60% Stärke weniger enthält als die rohe Knolle.

## Revendications

1. Procédé pour déshydrater des tubercules crus afin d'obtenir un produit alimentaire ayant une teneur en eau comprise entre 10 et 30 % en poids, qui comprend les étapes suivantes :
(a) enlever la peau des tubercules crus essentiellement exempts de saleté ;
(b) choisir la teneur finale en amidon et eau que le produit alimentaire final doit contenir ;
(c) déterminer les pourcentages initiaux d'amidon et d'eau dans les tubercules crus ; facultativement, couper les tubercules en tranches d'une épaisseur donnée ;
(d) déterminer l'épaisseur des tubercules épluchés, facultativement coupés en tranches ;
(e) plonger les tubercules dans une solution de 2,5 à 8,0 % (en volume) d'un agent d'extraction convenant pour la consommation humaine, capable d'oxyder l'amylopectine, pendant une période de temps correspondant au temps, en minutes, correspondant au nombre obtenu en retranchant ledit pourcentage final d'amidon dudit pourcentage initial d'amidon ;
(f) éliminer au moins une partie de la solution d'agent d'extraction par séchage par égouttage ;
(g) soumettre les tubercules séchés par égouttage à un traitement de déshydratation par application d'un courant d'air chaud dans un dispositif de séchage approprié, conformément à un programme, calculé sur la base d'une épaisseur de 1,5 mm, qui comprend les étapes suivantes :
(g1) appliquer un courant d'air chaud ayant une température initiale de 114 à 143°C pendant 12 à 17 minutes ;
(g2) abaisser la température à une vitesse de 1,7 à 2,3°C par minute jusqu'à ce qu'une température de 45 à 92°C soit atteinte ; élever la température jusqu'à 73 à 97°C ;
(g3) abaisser la température à une vitesse de 0,9 à 1,1°C par minute jusqu'à ce qu'une température de 55 à 75°C soit atteinte ;
(g4) augmenter de 5 minutes la période de séjour à ladite température initiale (g1) pour chaque unité de 0,5 mm d'épaisseur au-delà de 1,5 mm des tubercules ou branches de tubercules, et
(g5) élever de 4,5 à 5,5°C la température initiale (g1) pour chaque unité de 0,5 mm d'épaisseur au-delà de 1,5 mm des tubercules ou tranches de tubercules, après quoi la température résultante est abaissée d'une seule traite à 114 à 143°C avant le début de l'étape (g2) où la température est abaissée à une vitesse de 1,7 à 2,3°C par minute ; et
(g6) maintenir l'humidité relative du courant d'air au-dessous de 35 %, mais au-dessus du pourcentage d'eau désiré dans le produit alimentaire final.

2. Procédé selon la revendication 1, caractérisé en ce que la solution d'agent d'extraction est choisie parmi des solutions d'hypochlorite de sodium, d'acide acétique, d'alcool éthylique, d'acide citrique, d'acide chlorhydrique, d'acide acétique cristallisable ou d'acide nitreux.

3. Procédé selon la revendication 1, dans lequel la température initiale du programme d'application d'air chaud est une température de 130 à 140°C qui est appliquée pendant 15 minutes.

4. Procédé selon la revendication 3, dans lequel la température initiale est de 135°C.

5. Procédé selon la revendication 1, dans lequel la température initiale est abaissée à une vitesse de 2°C par minute jusqu'à ce qu'une température de 70 à 80°C soit atteinte.

6. Procédé selon la revendication 5, dans lequel la température initiale est abaissée à une vitesse de 2°C par minute jusqu'à ce qu'une température de 75°C soit atteinte.

7. Procédé selon la revendication 6, dans lequel, après l'abaissement de la température initiale, la température est élevée à 85°C à une vitesse de 1°C.

8. Procédé selon la revendication 1, dans lequel, après l'élévation qui suit l'abaissement de la température initiale, la température est abaissée à une vitesse de 1,0°C par minute jusqu'à ce qu'une température de 60 à 70°C soit atteinte.

9. Procédé selon la revendication 8, dans lequel la température est abaissée jusqu'à ce qu'une température de 65°C soit atteinte.

10. Procédé selon la revendication 1, dans lequel, pour chaque unité de 0,5 mm d'épaisseur au-delà d'une épaisseur de 1,5 mm du tubercule facultativement coupé, la période de séjour à ladite température initiale est augmentée de 5 minutes, et la température initiale est élevée de 5,0°C, la température résultante étant abaissée d'une seule traite à 65°C avant le début de l'étape dans laquelle la température est abaissée à une vitesse de 1,7 à 2,3°C par minute.

11. Procédé selon la revendication 1, dans lequel le tubercule est choisi parmi les pommes de terre, les patates douces, les maniocs et *Ipomea batatas*.

12. Procédé selon la revendication 2, dans lequel la concentration de la solution d'acide acétique dans l'eau est de 3 à 4 %.

13. Procédé selon la revendication 2, dans lequel la concentration de la solution d'alcool éthylique dans l'eau est de 7 à 8 %.

14. Procédé selon la revendication 2, dans lequel la concentration de la solution d'hypochlorite de sodium dans l'eau est de 5 à 6 %.

15. Produit alimentaire déshydraté selon le procédé défini dans l'une quelconque des revendications précédentes, qui contient 10 à 15 % en poids d'eau et une quantité d'amidon inférieure de 40 à 60 % à celle du tubercule cru.
